# EUROPÄISCHE PATENTSCHRIFT

(11) **EP 1 234 226 B1**
(45) Veröffentlichungstag und Bekanntmachung des Hinweises auf die Patenterteilung: **26.01.2005**
(21) Anmeldenummer: 00993285.6
(22) Anmeldetag: 30.11.2000
(51) Int. Cl.: G06F 3/06

(54) **BACKUP- UND ARCHIVIERUNGSSYSTEM MITTELS BANDKASSETTEN FÜR DATENVERARBEITUNGSANLAGEN**
BACKUP AND ARCHIVING SYSTEM BY MEANS OF TAPE CASSETTES FOR DATA PROCESSING UNITS
SYSTEME DE SAUVEGARDE ET D'ARCHIVAGE AU MOYEN DE CASSETTES DE BANDE MAGNETIQUE POUR DES INSTALLATIONS DE TRAITEMENT DE DONNEES

(30) Priorität: 30.11.1999 DE 19957552
(43) Veröffentlichungstag der Anmeldung: 28.08.2002
(73) Patentinhaber: Fujitsu Siemens Computers GmbH, 80807 München (DE)
(72) Erfinder: LINDER, Hansjörg, 81737 München (DE)
(74) Vertreter: Epping Hermann & Fischer
(86) Internationale Anmeldenummer: PCT/DE2000/004261
(87) Internationale Veröffentlichungsnummer: WO 2001/040924

(56) Entgegenhaltungen:
- US-A- 5 881 311
- US-A- 5 948 062

## Beschreibung

Die Erfindung betrifft ein Backup- und Archivierungssystem mittels Bandkassetten für Datenverarbeitungsanlagen gemäß dem Oberbegriff des Anspruchs 1.

Ein Backup- und Archivierungssystem mittels Bandkassetten für Datenverarbeitungsanlagen ist im US-5,881,311 beschrieben.

Bandkassetten sind derzeit das billigste Archivierungsmedium für die Realisierung von Backup- und Archivierungssysteme. Dabei führt ein heute stark wachsendes Datenvolumen einerseits zu einer steigenden Anzahl von Bandkassetten (nachfolgend auch Volumes genannt), die eine Host-Einheit einzeln adressiert. Auf der anderen Seite führt das wachsende Datenvolumen nur zu einem beschränkt größeren Datenvolumen pro Volume.

Hinzu kommt, dass heute die hauptsächliche Nutzung von Backup- und Archivierungssystemen in einem zeitlich immer enger werdenden Archivierungsfenster stattfindet, da ein Anwendungsbetrieb dadurch nicht behindert werden soll. An einen Backup- und Archivierungsvorgang sind daher hohe Parallelisierungsanforderungen gestellt, um ein Datenvolumen transferieren zu können.

Die tatsächlich nutzbaren Transferraten bei Backup- und Archivierungsvorgängen sind dabei derzeit deutlich unter denen, die von der heutigen Bandtechnologie unterstützt werden könnten. Dies liegt einerseits daran, dass von einzelnen Anwendungen nur beschränkte Datenraten transferiert werden können. Ein anderer Grund ist, dass, wenn die Datenströme mehrerer Anwendungen gebündelt werden, der Zugriff auf die Plattensysteme durch die Datenstrukturen der Systemplattformen begrenzt wird.

Bandsysteme zeigen darüberhinaus kurze Innovationszyklen auf eine weiter steigende Kapazität und eine um Faktoren steigende Transferrate auf. Einer der Gründe ist, dass über mehr Spuren auf ein Band geschrieben wird. Ein anderer Grund ist, dass der Grad einer Komprimierung der Daten erhöht wird.

Weiter erfolgt heute mehr und mehr eine Automatisierung der manuellen Bedienung von Bandperipheriegeräten durch Robotersysteme, sogenannte Stacker und ATLs (Automatic Tape Libraries).

Schließlich zeichnet sich heute eine verstärkte Tendenz zur Zentralisierung der Archivierung in Rechnerzentren ab, wobei dies übergreifend für mehrere Plattformen angestrebt wird.

Aus den oben beschriebenen Entwicklungstendenzen bedingen sich nachfolgend näher dargestellte Probleme.

So sinkt der durchschnittliche Füllungsgrad der Bänder. Es ist in Untersuchungen festgestellt worden, dass die Bänder durchschnittlich weniger als 20% belegt sind. Hochgerechnet auf die neuen Technologien droht diese Belegung auf bis zu 1% abzusinken. Damit sind die Volumes nur noch partiell und damit wiederum unwirtschaftlich belegt.

Die Transferraten der Kassetten-Laufwerke werden nicht ausgenutzt und stellen ein ungenutztes Potential dar.

Die Anzahl von Bändern/Kassetten steigt überproportional mit entsprechendem Stellflächenbedarf und verursacht hohe Kosten.

Erhöhte Kosten für Stellplätze in einem Roboter im Vergleich zu einem klassischen Regalstellplatz verschärfen die Kostenproblematik.

Die Kassetten-Laufwerke sind nur phasenweise ausgelastet, das heißt, sie werden unwirtschaftlich genutzt.

Da ein hoher Parallelisierungsgrad für kurzfristige Spitzenlast erforderlich ist, muss die Anzahl der Kassetten-Laufwerke zusätzlich erhöht werden, obwohl die Laufwerke nur selten in Benutzung sind. Mit anderen Worten, die Investitionskosten werden durch technische Zwänge zusätzlich erhöht.

Mit der heutigen Bandtechnologie treten nach wie vor Behinderungen beim Betrieb auf, die durch verlängerte Mount- und Positionier-Zeiten hervorgerufen sind. Zum Beispiel können solche Behinderungen bei einem sogenannten Reclaim auf archivierte Daten für Lesen oder Update auftreten.

Anpassungen der Host-Systeme zur optimalen Nutzung der Band- und Laufwerktechnologie können in der Regel nicht erfolgen, da funktionelle Anpassungen in den Anwendungen zu teuer sind.

Aufgrund der Inkompatibilität zwischen verschiedenen Herstellern und zwischen Generationen von Laufwerken entstehen für den Betreiber Probleme bei einem Erweiterungsbedarf und bei der Nutzung neuer Technologien.

Bisherige Lösungsansätze dieser Probleme können in zwei Kategorien unterteilt werden. Die eine Kategorie betrifft Einzellösungen, während die andere Kategorie integrierte Lösungen betrifft.

Eine erste Einzellösung kann mit dem Begriff "ATL" (Automatic Tape Libraries) umschrieben werden. ATL-Systeme ermöglichen, die manuelle Bedienung der Bandgeräte zu automatisieren. Neben der Einsparung von manueller Arbeit wird die Bedienung zuverlässiger, sicherer und die Mount-Zeiten, da maschinell ausgeführt, werden verkürzt. Ein ATL wird bei der aus Kostengründen verfolgten Zentralisierung typischerweise von mehreren Hosts gemeinsam genutzt. Damit können Bandkassetten oft von mehreren Systemen, unabhängig von der Systemplattform, gemeinsam benutzt werden.

Eine andere Einzellösung kann mit dem Begriff "Virtuelle Volumes" beschrieben werden. Bei dieser Lösung werden mehrere Volumes, die vom Host als unabhängig benannte Volumes bzw. Kassetten gesehen werden, auf einem einzigen physikalischen Volume realisiert. Dadurch wird der Füllungsgrad der physikalischen Volumes (Bandkassetten) erhöht, so dass weniger Bandkassetten vorgehalten werden müssen. Die spezifischen Eigenschaften eines neuen Laufwerks und der auf ihnen betriebenen Volumes werden nicht mehr für den Host sichtbar. Anpassungen fallen deshalb für den Betrieb des Hosts nicht an, da, wenn zu einer neuen Generation übergegangen wird, die Anpassungen durch die Virtualisierung abgefangen werden. Das heißt, die Anpassungen werden in einer mit Software realisierten Virtualisierungsschicht erbracht.

Eine weitere Einzellösung ist das Zwischenspeichern von Daten. Die Daten werden in einem Volume-Cache zwischengespeichert. Das heißt, es werden vollständige Virtuelle Volumes auf einem Plattenspeicher gespeichert, um ein unmittelbares (ohne vorherige Mount-Zeit) Schreiben und schnelleres (ohne Mount- und Positionier-Zeiten) Lesen zu ermöglichen. Das Aus- und Einlagern von einem Virtuellen Volume in den Volume-Cache kann dann unter Ausnutzung der physikalischen Bandtransferrate erfolgen. Das heißt, man kann mit weniger Laufwerken die Performance-Anforderungen der Archivierung erfüllen, als in Fällen, bei denen der Host direkt auf Bandkassettenlaufwerke zugreift. An der Schnittstelle zum Host können mehr virtuelle Kassetten-Laufwerke angeboten werden, als physikalisch installierte Kassetten-Laufwerke vorhanden sind.

Für die optimierte Verwaltung des Plattenzwischenspeichers werden variable Mechanismen eingesetzt, womit Vorreservierungen usw. möglich sind. Diese steuern den Zeitpunkt der sekundären Datenübertragungen, das heißt, wann ein virtuelles Volume zwischen Volume-Cache und physikalischen Kassetten transferiert wird.

Um bei einer Störung des Zwischenspeichers keinen Datenverlust zu erleiden, werden Maßnahmen zur Ausfallsicherheit der Platten ergriffen. Die Nutzung von sogenannten RAID-Platten ist ein Beispiel für solche Maßnahmen.

Für Volume-Caching wird typischerweise auf einem Standard-Dateisystem aufgesetzt. Ein solches Standard-Dateisystem ist beispielsweise ein UNIX-Dateisystem. In diesem Dateisystem werden auch Daten gehalten, wie Etiketten-Inhalte von den Virtuelle Volumes, die verwaltet werden, sowie Meta-Informationen. Meta-Informationen sind beispielsweise Informationen darüber, welches Virtuelle Volume auf welcher physikalischen Bandkassette liegt, usw..

Bei einem geeignet dimensionierten Volume-Cache kann mit einem kurzen Zeitfenster für die Archivierung, zum Beispiel mit einem Zeitfenster von 2 Stunden, mit hohem Datenverkehr zwischen Host und Platte eine fast durchgehende Auslastung der Kassetten-Laufwerke über 24 Stunden erreicht werden.

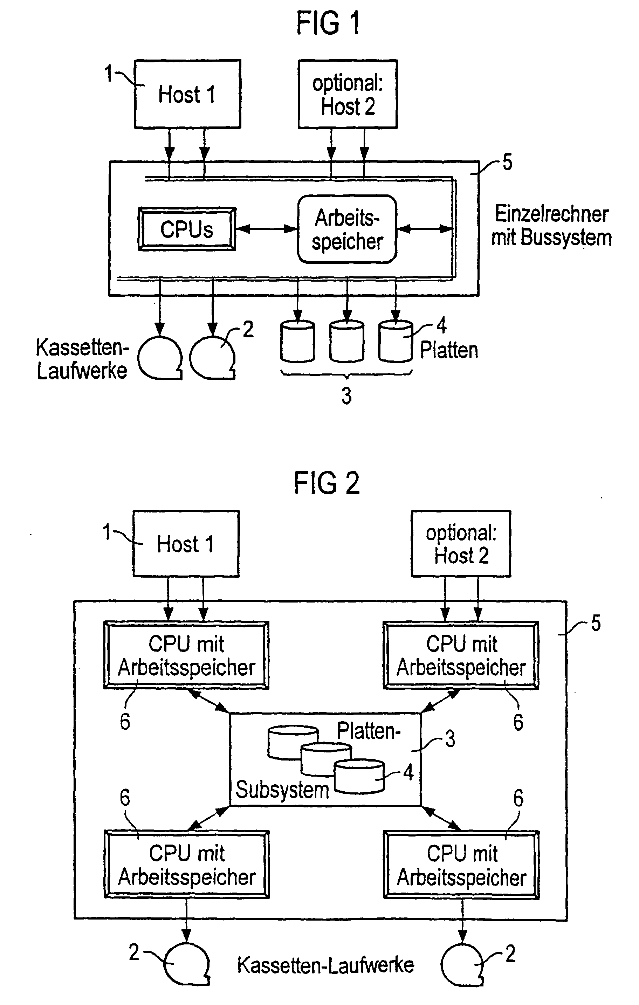

Bei einer integrierten Lösung wird in einem System gleichzeitig Virtualisierung, Caching und Bedienung über ein ATL realisiert. Entsprechende Verarbeitungsleistungen werden von einem System einer Architektur, das bildlich in der Figur 1 näher dargestellt ist und im Folgenden als ein Architekturmodell M1 bezeichnet wird, eigenständig erbracht.

Die integrierte Lösung nach dem Architekturmodell M1 ergibt sich als natürlicher Ansatz, um die eingangs geschilderten Probleme zu lösen. Auf der anderen Seite ergeben sich mit dem Architekturmodell M1 neue Probleme.

Das System nach Architekturmodell M1 kann bei entsprechenden Konfigurationen selbst zum Engpass werden. Die Skalierbarkeit eines Systems ist deshalb schon für heutige Installationen zu eng.

Weiter problematisch ist, dass Garantien für Transferraten gegenüber dem Host auf Grund der komplexen internen Abläufe des Systems mit gegenseitiger Behinderung nur noch bedingt möglich sind. Insbesondere können Betriebsbehinderungen durch interne Reorganisationsvorgänge des Systems entstehen, wenn ein nur noch gering belegtes Band zum Beispiel im Zuge eines Kassetten-Recycles wieder voll genutzt werden soll.

Die geringe Belegung der Bänder rührt daher, dass einerseits zusätzliche Daten immer nur am Ende des Bandes angefügt werden können, andererseit ungültige Daten zwar entsprechend markiert, auf dem Band aber nicht gelöscht werden können. Der blockierte Platz auf den Bändern kann nur durch eine Reorganisation wiedergewonnen werden, indem die zu erhaltenden Daten ausgelesen, zwischengespeichert und anschließend auf ein neu formatiertes Band geschrieben werden. Dies führt zu einer enormen zusätzlichen Belastung insbesondere der CPU und des Bussystems der Archivierungssysteme, so dass die Gesamtleistung der Systeme weiter absinkt.

Problematisch ist auch, dass das System zusätzlich einen neuen Gefahrenpunkt darstellt. Es müssen zusätzliche Anstrengungen gemacht werden, um beim Ausfall einzelner Komponenten einen Ausfall des Systems zu vermeiden.

Zur Vermeidung des Engpasses für den Durchsatz werden Multiprozessor- und Multibussysteme eingesetzt. Alle Daten, die zwischen Host und Platten und alle Daten, die zwischen Platten und Bandkassetten transferiert werden, müssen aber über den Arbeitsspeicher der CPUs bewegt werden, da die Datenformate, zum Beispiel Blockung der Daten, Headerinformationen usw., zwischen Host, Caching-Platte und Bandkassetten verschieden sind. Es erweist sich deshalb, dass die Transferrate zum Arbeitsspeicher der CPUs für den Durchsatz des gesamten Systems der begrenzende Faktor ist. Dies gilt genauso für Multiprozessorsysteme.

Dieser potentielle Engpass begrenzt die Skalierbarkeit von Systemen nach dem Architekturmodell M1 und zwingt gegebenenfalls den Betreiber, mehrere Systeme mit folglich getrennten Datenmengen zu betreiben. Hieraus ergeben sich für den Betreiber organisatorische Probleme beispielsweise durch den Zwang, seine internen Arbeitsabläufe zu reorganisieren.

Eine besonderes Problem besteht darin, dass eine Garantie von Transferraten gegenüber den Hosts nicht gegeben werden kann. Mittelbar angestoßene Transfers zwischen dem Volume-Cache und physikalischen Bandkassetten behindern den Datenverkehr zwischen Host und Volume-Cache, da sie beide über den Arbeitsspeicher umformatiert werden müssen. Daraus resultierende Schwankungen der dem Host verfügbaren Transferraten erfordern zu ihrer Vermeidung gegebenenfalls eine Reservekapazität des Systems, die ansonsten nicht bereitzustellen ist. Ansätze, unter Umgehung des Volume-Caches direkt von einem Kassetten-Laufwerk auf ein anderes zu kopieren, vermindert zwar die Belastung des Arbeitsspeichers, belegen aber ein zusätzliches physikalisches Laufwerk. Dadurch ist die externe Steuerung der internen Optimierung noch schwieriger.

Ausfallsichere Doppelsysteme nach dem Architekturmodell M1 sind bisher nicht auf dem Markt. Da hier zusätzliche Koordinationsaufwände anfallen, entstehen dabei gegebenenfalls auch zusätzliche Engpässe und Steuerungsprobleme.

Aufgabe der vorliegenden Erfindung ist, ein Backup- und Archivierungssystem der eingangs genannten Art anzugeben, bei dem ein Engpass wegen eines zentralen Arbeitsspeichers insbesondere bei Backup- und Archivierungsvorgängen im höheren Leistungsbereich vermieden ist.

Diese Aufgabe ist durch ein Backup- und Archivierungssystem gelöst, das die Merkmale des Anspruchs 1 aufweist.

Danach ist eine verteilte Hardware-Architektur realisiert, bei der mehrere Komponenten-Rechner ohne wechselseitige Behinderungen arbeiten. Dadurch ist der Zugriff auf ein einen Engpass verursachendes zentrales Hardware-Element, beispielsweise dem zentralen Arbeitsspeicher in einem oben angesprochenen Architekturmodell M1, für die Datenumformung vermieden. Gemäß der verteilten Hardware-Architektur stehen mehrere unabhängige Arbeitsspeicher, nämlich einer pro Komponenten-Rechner, zur Verfügung, die Datenumformungen durchführen.

Diese verteilte Hardware-Architektur hat außerdem den Vorteil, dass durch eine gesteigerte Anzahl von Komponenten-Rechnern die Gesamtleistung des Backup- und Archivierungssystems über das heute erforderliche Leistungsspektrum hinaus erhöht werden kann. Dem Hinzufügen von zusätzlichen Dateneingängen und/oder Kassettenlaufwerken kann dadurch Rechnung getragen werden, dass einfach weitere Komponentenrechner hinzugefügt werden.

Weiter vorteilhaft ist, dass auf Grund der virtuell verteilten Architektur zur Realisierung des Backup- und Archivierungssystems benötigte Software-Komponenten skalierbar sind. Die Hardware-Basis spielt keine Rolle, das heißt, es spielt keine Rolle, ob es sich um eine Einprozessor- oder um eine Mehrprozessorbasis handelt.

Mit dem erfindungsgemäßen Gegenstand lassen sich grundsätzlich höhere Gesamttransferraten erzielen als bei bisherigen Architekturen. Sind weitere Leistungssteigerungen nötig, ist dies realisierbar, da alle vorhandenen Kopplungsmedien durch Vervielfachung in ihrer Kapazität über den heute absehbaren Bedarf hinaus erweiterbar sind.

Es ist außerdem vorteilhaft, dass unnötige Reservekapazitäten eingespart werden, wenn Garantien für Transferraten gegenüber den Hosts erforderlich sind.

Desweiteren werden komplexe Sonderlösungen zur Entlastung des Engpasses der Datenumformung im Hauptspeicher für das Recyceln von Kassetten vermieden.

Schließlich ist es vorteilhaft, dass der Einsatz von Hardware-Standardkomponenten für die erste, zweite und dritte Funktionseinheit auch für den Höchstleistungsbereich möglich ist, wodurch geringe Gesamtkosten entstehen.

Vorteilhafte Ausgestaltungen der Erfindung sind Gegenstand von Unteransprüchen.

Danach sind LAN-, SCSI- und FC-Verbindungsstrukturen für eine schnelle Datenübertragung verwendet.

Sind mehrere Komponenten-Rechnern und den Kassetten-Laufwerke bzw. Hosts über entsprechende Mehrfachanschlüsse miteinander verbunden, können die Komponenten-Rechner gegenseitig als Ersatzrecher ohne Mehrkosten genutzt werden, wodurch eine hohe Ausfallsicherheit des Systems gegeben ist. Die Koordination des Normalbetriebs wird dadurch nicht belastet.

Durch eine mehrfache Auslegung von Hardware-Komponenten, die für einen Zugriff auf den Volume-Cache, für die Kommunikation für den Zugriff auf den Volume-Cache und für die Kommunikation für Verwaltungsaufgaben zwischen den Komponenten-Rechnern notwendig sind, wird weiter eine Leistungssteigerung des Systems erzielt, da hierdurch ansonsten eventuell an diesen Stellen auftretende Engpässe vermieden werden.

Nachfolgend wird ein Ausführungsbeispiel der Erfindung anhand einer Zeichnung näher erläutert. Darin zeigen:
- Figur 1: ein schematisch dargestelltes Backup- und Archivierungssystem mit einem integrierten Volume-Cache gemäß dem Stand der Technik,
- Figur 2: ein schematisch dargestelltes Backup- und Archivierungssystem mit einer verteilten Hardware-Architektur gemäß der Erfindung,
- Figur 3: eine schematische Darstellung der Software-Architektur eines Backup- und Archivierungssystems gemäß der Figur 2, und
- Figur 4: eine schematische Zusammenfassung der Hard- und der Software-Architektur gemäß der Figuren 2 und 3 zu einem allgemeinen Virtual Tape Library System gemäß der Erfindung nach Figur 2.

Das in der Figur 1 gezeigte Backup- und Archivierungssystem mittels Bandkassetten für Datenverarbeitungsanlagen ist mit einer Host-Einheit 1 verbunden. Optional kann auch eine zweite oder noch weitere Host-Einheiten 1 vorgesehen sein. Das Backup- und Archivierungssystem nach Figur 1 weist mindestens ein Kassetten-Laufwerk 2 für Bandkassetten auf. Weiter ist ein Plattenspeicher-Subsystem 3 vorgesehen, das mindestens eine Plattenspeicher-Einheit 4 umfasst. Zur gegenseitigen datentechnischen Kopplung von vorhandenen Hosts 1, der Kassetten-Laufwerke 2 und des Plattenspeicher-Subsystems 3 ist zwischen diesen Einheiten eine datentechnische Koppeleinheit 5 geschaltet. Wie die Figur 1 auch zeigt, ist die datentechnische Koppeleinheit 5 durch einen Einzelrechner mit Bussystem 17 gebildet. Der Einzelrechner weist eine oder mehrere CPUs (Central Processing Units) auf, das heißt einen oder mehrere Zentralprozessoren, die mit einem zentralen Arbeitsspeicher 16 zusammen die Datentransfers zwischen den Hosts 1, den Kassetten-Laufwerken 2 und dem Plattenspeicher-Subsystem 3 abarbeiten. Hierfür stehen die CPUs und der zentrale Arbeitsspeicher 16 mit dem Bussystem 17 in Verbindung, mit dem die Hosts 1, die Kassetten-Laufwerke 2 und das Plattenspeicher-Subsystem 3 ebenfalls in Verbindung stehen. Über den zentralen Arbeitsspeicher finden die Datenumformungen statt, die bei den Backup- und Archivierungsvorgängen notwendig sind.

Figur 2 zeigt ein erfindungsgemäßes Backup- und Archivierungssystem, das auf einer virtuell verteilten Hard- und Software-Architektur basiert. In Analogie zur Architektur des Backup- und Archivierungssystems gemäß Figur 1, das auch als Architekturmodell M1 bezeichnet worden ist, kann die Architektur des Backup- und Archivierungssystems gemäß der Figur 2 als Architekturmodell M2 betrachtet werden.

Das Backup- und Archivierungssystem gemäß der Figur 2 ist, wie das Backup- und Archivierungssystem gemäß der Figur 1, mit einem oder mehreren Hosts 1 und einem oder mehreren Kassetten-Laufwerken 2 verbunden. Die Daten der Hosts 1 werden an Dateneingängen 15 bereitgestellt. Ferner ist ein Plattenspeicher-Subsystem 3 mit mindestens einer Plattenspeicher-Einheit 4 als Teil einer datentechnischen Koppeleinheit 5 vorhanden. Die datentechnische Koppeleinheit 5 ist, wie in der Figur 1, mit den Hosts 1 und den Kassetten-Laufwerken 2 verbunden.

Im Gegensatz zur Figur 1 sind innerhalb der datentechnischen Koppeleinheit 5 der Figur 2 zum Abwickeln der bei Backup- und Archivierungsvorgängen benötigten datentechnischen Prozessen getrennte Funktionseinheiten 11 und 12 vorgesehen, die jeweils mehrere Komponenten-Rechner 6 mit jeweiligen CPUs und Arbeitsspeichern aufweisen. Eine zweite Funktionseinheit 11 übernimmt die Übertragung von an dem mindestens einen Dateineingang (15) empfangenen Daten auf das Plattenspeicher-Subsystem (3), während eine dritte Funktionskomponente zur Übertragung der auf dem Plattenspeicher-Subsystem (3) zwischengespeicherten Daten zu dem mindestens einen Kassettenlaufwerk (2) vorgesehen ist. Eine erste Funktionskomponente 10 koordiniert und steuert die Datenflüsse zwischen den Dateneingängen 15, den Kassettenlaufwerken 2 und dem Plattenspeicher-Subsystem 3. Die Funktionseinheiten 11 und 12 sind im Ausführungsbeispiel von Figur 2 durch je zwei Komponenten-Rechner 6 realisiert, die jeweils mit dem Plattenspeicher-Subsystem 3 verbunden sind. Einige der Komponenten-Rechner 6 sind darüberhinaus zum Abwickeln des Datentransfers zur Host-Seite hin jeweils mit wenigstens einem Host 1 verbunden. Einige andere Komponenten-Rechner 6 sind darüberhinaus zur Kassetten-Laufwerk-Seite hin jeweils mit einem Kassetten-Laufwerk 2 verbunden. Die Anzahl der Komponenten-Rechner 6 kann variabel gewählt werden.

Das Plattenspeicher-Subsystem 3 ist in der Beschreibung manchmal auch als Volume-Cache bezeichnet.

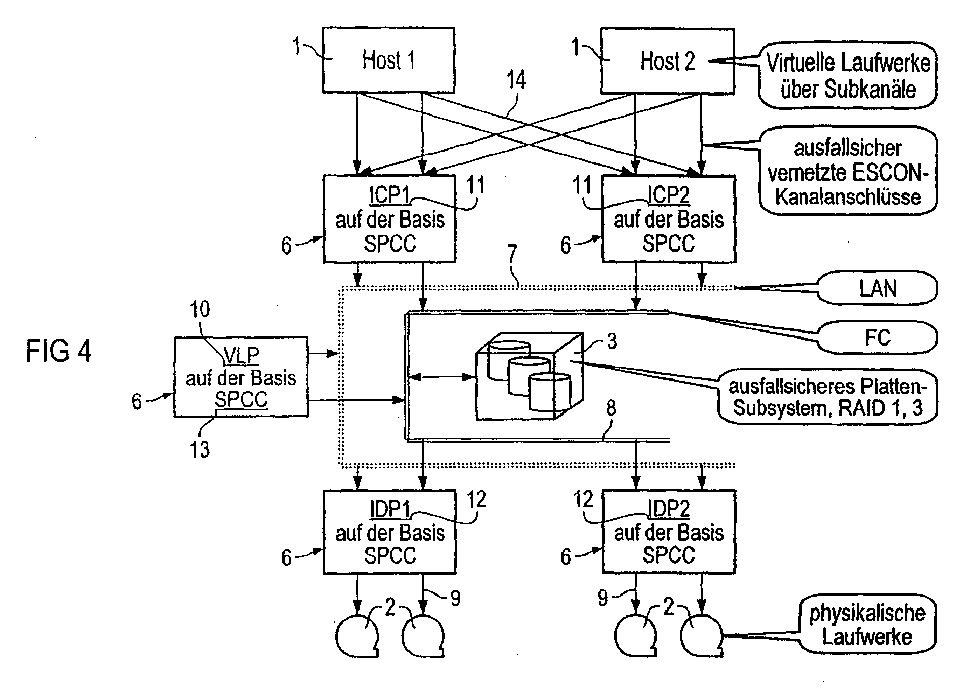

Figur 4 zeigt den Sachverhalt gemäß der Figur 2 detaillierter. In der Figur 4 sind die Komponenten-Rechner 6 für einen datentechnischen Informationsaustausch untereinander durch ein entsprechendes erstes Koppelelement 7 verbunden.

Im Ausführungsbeispiel ist dieses erste Koppelelement 7 durch ein LAN (Local Area Network), das heißt durch ein lokales Netzwerk realisiert. Ein lokales Netzwerk ist eine hard- und softwaremäßige Verknüpfung von Computern zu einem funktionellen System.

Wie Figur 4 weiter zeigt, sind betreffende Komponenten-Rechner 6 für einen Datentransfer zwischen den betreffenden Komponenten-Rechnern 6 und dem Plattenspeicher-Subsystem 3 bzw. den Kassetten-Laufwerken durch ein entsprechendes schnell arbeitendes zweites Koppelelement (8; 9) mit dem Plattenspeicher-Subsystem 3 bzw. den Kassetten-Laufwerken 2 verbunden. Im einzelnen ist das Koppelelement 8 zwischen den betreffenden Komponenten-Rechnern 6 und dem Plattenspeicher-Subsystem 3 in einer FC-Technik (Fibre Channel) und ist das Koppelelement 9 zwischen den betreffenden Komponenten-Rechnern 6 und den Kassetten-Laufwerken 2 in einer SCSI-Technik (Small Computer System Interface) realisiert. Das Koppelelement 8 zwischen den betreffenden Komponenten-Rechnern 6 und dem Plattenspeicher-Subsystem 3 könnte in einem anderen Ausführungsbeispiel auch in einer FC-AL-Technik (Fibre Channel-Arbitrated Loops) realisiert sein. Die FC-Technik ermöglicht die Überbrückung großer Entfernungen bis zu 10 km.

Im Backup- und Archivierungssystem gemäß der Figur 2 bzw. 4 ist ein verteiltes Dateisystem realisiert mit einer Koordinationsfunktion für Zugriffe auf Dateien dieses Dateisystems durch interne, verteilt oder nicht verteilt auf den Komponenten-Rechnern 6 ablaufende Prozesse. Die Kommunikation dieser Prozesse erfolgt über das zwischen den Komponenten-Rechnern 6 angeordnete erste Koppelelement 7.

Zu den Prozessen gehören solche Prozesse, für deren Bewerkstelligung erste Funktionskomponenten 10 (Figur 4) zuständig sind und die eine Strategiefunktion realisieren, durch die Entscheidungen bezüglich Platzierung von Daten und bezüglich Zeitpunkten ihrer Aus- und Einlagerung im Plattenspeicher-Subsystem angestoßen sind. Im folgenden werden diese Prozesse kurz mit VLP (Virtual Library Process) bezeichnet.

Zu den oben erwähnten Prozessen gehören weiter solche Prozesse, für deren Bewerkstelligung zweite Funktionskomponenten 11 (Figur 4) zuständig sind und die die Zugriffe seitens der Host-Einheiten auf das Plattenspeicher-Subsystem 3 realisieren. Diese Prozesse werden kurz mit ICP (Internal Channel Process) bezeichnet.

Schließlich gehören zu den oben erwähnten Prozesse solche Prozesse, für deren Bewerkstelligung dritte Funktionskomponenten 12 (Figur 4) zuständig sind und die den Datentransfer zwischen dem Plattenspeicher-Subsystem 3 und den Kassetten-Laufwerken 2 steuern. Diese Prozesse werden kurz mit IDP (Internal Device Process) bezeichnet.

Das Plattenspeicher-Subsystem 3 in den Figuren 2 und 4 ist auf der Basis eines RAID-Systems (Redundant Array of Independant Disks), zum Beispiel RAID1 und/oder RAID3, realisiert.

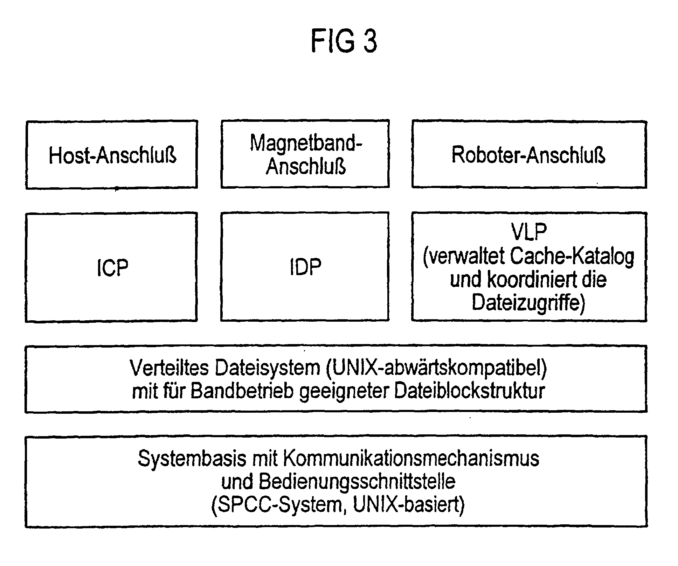

Figur 3 zeigt einen Überblick über die Software-Architektur, die auf dem Virtual Tape Library System (VTLS) gemäß der Figur 2 bzw. 4 realisiert ist. Grundlage ist eine Systembasis mit Kommunikationsmechanismen und Bedienungsschnittstellen.

Gemäß dem Ausführungsbeispiel insbesondere nach der Figur 4 dient als eine Systembasis ein UNIX-System. Für die Anbindung der Komponenten-Rechner 6 an das übrige System sind Standard Peripheral Channel Connectors (SPCC) verwendet. Die SPCCs sind ein Siemens-Produkt (zum Beispiel Kanaladapter 3970). Sie sind spezielle leistungsfähige Adapter, mit denen die physikalische Verbindung zu den einzelnen betreffenden System-Komponenten hergestellt ist.

Auf dieser Systembasis baut UNIX-abwärtskompatibel das verteilte Dateisystem mit für Bandbetrieb geeigneter Dateiblockstruktur auf.

In einer nächsthöheren Schicht sind parallel die verschiedenen Prozesse ICP, IDP und VLP realisiert. VLP verwaltet den Cache-Katalog und koordiniert die Dateizugriffe.

In der obersten Schicht sind die Host-Anschlüsse, Magnetband-Anschlüsse (Anschlüsse zu den Kassetten-Laufwerken) und Roboter-Anschlüsse (Anschlüsse zu den Plattenspeicher-Einheiten) realisiert.

In der Figur 4 ist eine typische Hardware-Software-Konfiguration eines VTLS zu sehen, das fünf Komponenten-Rechner 6 enthält. Jeder Komponenten-Rechner 6 enthält ein SPCC-System als Basis für die darauf aufsetzenden Softwareschichten (Figur 3). Zur Erhöhung der Ausfallsicherheit sind die externen Anschlüsse 14 zu den Hosts 1 doppelt ausgelegt. Dadurch können ICP1 und ICP2 wechselseitig die Aufgaben des jeweils anderen übernehmen. Der VLP läuft auf einem eigenständigen Komponenten-Rechner 6. Bei Ausfall dieses Komponenten-Rechners 6 wird der VLP auf einem anderen Komponenten-Rechner 6, beispielsweise IDP1 neu gestartet. Da alle Daten über den Verarbeitungsstatus der Virtual Volumes und der physikalischen Kassetten in dem ausfallsicheren Plattenspeicher-Subsystem 3 gespeichert sind, kann der neu gestartete Prozess die Aufgaben des abgebrochenen nach einer kurzen Verzögerung weiterführen.

Die Kanalanschlüsse zu den Hosts 1 können durch ausfallsichere vernetzte ESCON-Kanalanschlüsse (Enterprise Systems CONnection) realisiert sein. Die ESCON-Technologie ist ein IBM-Produkt.

## Patentansprüche

1. Backup- und Archivierungssystem mittels Bandkassetten für Datenverarbeitungsanlagen mit
- mindestens einem Dateneingang (15) zur Entgegennahme von zu speichernden Daten,
- mindestens einem Kassetten-Laufwerk (2) für Bandkassetten,
- einer Koppeleinheit (5) zum Verbinden des mindestens einen Dateneingangs (15) mit dem mindestens einen Kassetten-Laufwerk (2), die ein Plattenspeicher-Subsystem (3) mit mindestens einer Plattenspeicher-Einheit (4) aufweist zur Zwischenspeicherung von auf den Bandkassetten zu sichernden Daten,
**dadurch gekennzeichnet, dass**
- eine zweite Funktionseinheit (11) zur Übertragung von an dem mindestens einen Dateineingang (15) empfangenen Daten auf das Plattenspeicher-Subsystem (3) vorgesehen ist,
- eine dritte Funktionseinheit (12) zur Übertragung der auf dem Plattenspeicher-Subsystem (3) zwischengespeicherten Daten zu dem mindestens einen Kassettenlaufwerk (2) vorgesehen ist und
- eine erste Funktionseinheit (10) vorgesehen ist, die die zweite und dritte Funktionseinheit (11, 12) überwacht zur Kontrolle der Verarbeitungsprozesse und des Zugriffs auf das Plattenspeicher-Subsystem (3)
wobei für die erste, zweite und dritte Funktionseinheit (10, 11, 12) je mindestens ein Komponentenrechner (6) vorgesehen ist und
wobei die zweite und dritte Funktionseinheit (11, 12) getrennte Funktionseinheiten bilden, die zum Abwickeln der bei Backup- und Archivierungsvorgängen benötigten datentechnischen Prozesse eingerichtet sind.

2. Backup- und Archivierungssystem nach Anspruch 1,
**dadurch gekennzeichnet, dass** für jeden Dateneingang (15) und/oder jedes Kassettenlaufwerk (2) jeweils ein Komponentenrechner (6) vorgesehen und durch die erste Funktionseinheit (10) separat ansteuerbar ist.

3. Backup- und Archivierungssystem nach Anspruch 1,
**dadurch gekennzeichnet, dass** die dritte Funktionseinheit (12) mehrere Komponentenrechner (6) aufweist, wobei jeder der Komponentenrechner (6) mit einem Kassetten-Laufwerk (2) für Bandkassetten verbunden ist und jeder Komponentenrechner (6) durch die erste Funktionseinheit (10) separat ansteuerbar ist.

4. Backup- und Archivierungssystem nach Anspruch 2 oder 3,
**dadurch gekennzeichnet, dass** jede der Komponentenrechner (6) einen Mikroprozessor und einen Arbeitsspeicher sowie ein Bussystem (8) aufweist.

5. Backup- und Archivierungssystem nach Anspruch 1 oder 2,
**dadurch gekennzeichnet, dass** die Verbindung zwischen der zweiten und dritten Funktionseinheit (11, 12) mit dem Plattenspeicher-Subsystem (3) über ein Bussystem (8) in einer FC- und/oder einer SCSI-Verbindungsstruktur realisiert ist.

6. Backup- und Archivierungssystem nach einem der vorherigen Ansprüche,
**dadurch gekennzeichnet, dass** zwischen mehreren Komponenten-Rechnern (6) und den Kassetten-Laufwerken (2) bzw. den die Daten an den Dateneingängen (15) bereitstellenden Hosts (1) Mehrfachanschlüsse für einen gegenseitigen Ersatzrechnerdienst vorgesehen sind.

7. Backup- und Archivierungssystem nach einem der vorherigen Ansprüche,
**dadurch gekennzeichnet, dass** eine mehrfache Auslegung von wenigstens einer der Hardware-Komponenten, die für einen Zugriff auf das Plattenspeicher-Subsystem (3), für die Kommunikation für den Zugriff auf das Plattenspeicher-Subsystem (3) und für die Kommunikation für Verwaltungsaufgaben zwischen den Komponenten-Rechnern (6) notwendig sind, vorgesehen ist.

## Claims

1. Backup and archiving system by means of tape cassettes for data processing systems with
- at least one data input (15) for receiving data to be stored,
- at least one cassette drive (2) for tape cassettes,
- a coupling unit (5) for connecting the at least one data input (15) to the at least one cassette drive (2), which has a disk storage subsystem (3) with at least one disk storage unit (4) for buffer-storing data to be saved on the tape cassettes,
**characterized in that**
- provision is made of a second function unit (11) for transferring data received at the at least one data input (15) to the disk storage subsystem (3),
- provision is made of a third function unit (12) for transferring the data buffer-stored on the disk storage subsystem (3) to the at least one cassette drive (2), and
- provision is made of a first function unit (10), which monitors the second and third function units (11, 12) in order to supervise the processing processes and the access to the disk storage subsystem (3),
at least one component computer (6) in each case being provided for the first, second and third function units (10, 11, 12), and
the second and third function units (11, 12) forming separate function units which are set up for handling the data-technological processes required during backup and archiving operations.

2. Backup and archiving system according to Claim 1, cassette drive (2) and can be driven separately by the first function unit (10).

3. Backup and archiving system according to Claim 1, **characterized in that** the third function unit (12) has a plurality of component computers (6), each of the component computers (6) being connected to a cassette drive (2) for tape cassettes, and each component computer (6) being able to be driven separately by the first function unit (10).

4. Backup and archiving system according to Claim 2 or 3,
**characterized in that** each of the component computers (6) has a microprocessor and a main memory as well as a bus system (8).

5. Backup and archiving system according to Claim 1 or 2,
**characterized in that** the connection between the second and third function units (11, 12) to the disk storage subsystem (3) is realized via a bus system (8) in an FC and/or an SCSI connection structure.

6. Backup and archiving system according to one of the preceding claims,
**characterized in that** multiple connections for a mutual substitute computer service are provided between a plurality of component computers (6) and the cassette drives (2) and/or the hosts (1) submitting the data at the data inputs (15).

7. Backup and archiving system according to one of the preceding claims,
**characterized in that** a multiple layout is provided of at least one of the hardware components required for access to the disk storage subsystem (3) for communication for access to the disk storage subsystem (3) and for communication for management tasks between the component computers (6).

## Revendications

1. Système de sauvegarde et d'archivage au moyen de cassettes de bande magnétique pour des installations de traitement de données, comportant
- au moins une entrée de données (15) pour la réception de données à mémoriser,
- au moins un dérouleur de cassette (2) pour des cassettes de bande magnétique,
- une unité de connexion (5) qui est destinée à relier la ou les entrées de données (15) au dérouleur de cassette ou aux dérouleurs de cassette (2) et qui comporte un sous-système de mémoire à disques (3) avec au moins une unité de mémoire à disques (4) pour la mémorisation temporaire de données à sauvegarder sur les cassettes de bande magnétique,
**caractérisé par le fait que**
- une deuxième unité fonctionnelle (11) est prévue pour la transmission de données reçues sur la ou les entrées de données (15) vers le sous-système de mémoire à disques (3),
- une troisième unité fonctionnelle (12) est prévue pour la transmission des données mémorisées temporairement sur le sous-système de mémoire à disques (3) vers le ou les dérouleurs de cassette (2), et
- une première unité fonctionnelle (10) est prévue pour surveiller la deuxième et la troisième unité fonctionnelle (11, 12) en vue du contrôle des processus de traitement et de l'accès au sous-système de mémoire à disques (3),
au moins un élément ordinateur (6) étant prévu à chaque fois pour la première, la deuxième et la troisième unité fonctionnelle (10, 11, 12) et
la deuxième et la troisième unité fonctionnelle (11, 12) formant des unités fonctionnelles distinctes qui sont conçues pour exécuter les processus informatiques nécessaires lors des opérations de sauvegarde et d'archivage.

2. Système de sauvegarde et d'archivage selon la revendication 1,
**caractérisé par le fait que**, pour chaque entrée de données (15) et/ou pour chaque dérouleur de cassette (2), il est prévu à chaque fois un élément ordinateur (6) qui peut être commandé séparément par la première unité fonctionnelle (10).

3. Système de sauvegarde et d'archivage selon la revendication 1,
**caractérisé par le fait que** la troisième unité fonctionnelle (12) comporte plusieurs éléments ordinateurs (6), chacun des éléments ordinateurs (6) étant relié à un dérouleur de cassette (2) pour cassettes de bande magnétique et chaque élément ordinateur (6) pouvant être commandé séparément par la première unité fonctionnelle (10).

4. Système de sauvegarde et d'archivage selon la revendication 2 ou 3,
**caractérisé par le fait que** chacun des éléments ordinateurs (6) comporte un microprocesseur et une mémoire de travail ainsi qu'un système de bus (8).

5. Système de sauvegarde et d'archivage selon la revendication 1 ou 2,
**caractérisé par le fait que** la liaison entre la deuxième et la troisième unité fonctionnelle (11, 12) et le sous-système de mémoire à disques (3) est réalisée par l'intermédiaire d'un système de bus (8) avec une structure de liaison FC et/ou SCSI.

6. Système de sauvegarde et d'archivage selon l'une des revendications précédentes,
**caractérisé par le fait que**, entre plusieurs éléments ordinateurs (6) et les dérouleurs de cassette (2) ou les unités principales (1) fournissant les données aux entrées de données (15), il est prévu des connexions multiples pour un service réciproque d'ordinateur de secours.

7. Système de sauvegarde et d'archivage selon l'une des revendications précédentes,
**caractérisé par le fait qu'**il est prévu une conception multiple d'au moins l'un des composants matériels qui sont nécessaires à un accès au sous-système de mémoire à disques (3), à la communication pour l'accès au sous-système de mémoire à disques (3) et à la communication pour des tâches de gestion entre les éléments ordinateurs (6).
